# EUROPEAN PATENT APPLICATION

(11) **EP 3 637 274 A1**
(43) Date of publication of application: **15.04.2020**
(21) Application number: 18828956.5
(22) Date of filing: 08.05.2018
(51) Int. Cl.: G06F 16/00

(54) **INFORMATION PROCESSING DEVICE, INFORMATION PROCESSING METHOD, AND COMPUTER PROGRAM**

(30) Priority: 07.07.2017 JP 2017133545
(71) Applicant: SONY Corporation, Tokyo 108-0075 (JP)
(72) Inventor: KII, Manabu, Tokyo 140-0002 (JP); KOMATSU, Hidehiro, Tokyo 140-0002 (JP); ITOYAMA, Junji, Tokyo 141-0022 (JP); ISHIHARA, Atsushi, Tokyo 140-0002 (JP)
(74) Representative: D Young & Co LLP
(86) International application number: PCT/JP2018/017834
(87) International publication number: WO 2019/008891

(57) **Abstract**

To provide an information processing device capable of: determining processing to be executed for a message from the outside; and providing a response to a message sender.

Provided is an information processing device including: an acquisition unit that acquires message data; a processing determination unit that analyzes the message data and determines a processing target and processing to be executed; and an output unit that outputs a response message including a result of the processing.

## Description

### TECHNICAL FIELD

The present disclosure relates to an information processing device, an information processing method, and a computer program.

### BACKGROUND ART

For example, Patent Document 1 discloses a technology relating to a robot device that obtains a message from a user and communicates with a third party desired by the user to notify the third party of the message.

### CITATION LIST

### PATENT DOCUMENT

Patent Document 1: Japanese Patent Application Laid-Open No. 2004-90109

### SUMMARY OF THE INVENTION

### PROBLEMS TO BE SOLVED BY THE INVENTION

It can be considered that processing to be executed for a message from the outside can be determined and a response can be provided to a message sender by mounting a network communication function in a robot described above.

Accordingly, the present disclosure proposes an information processing device, an information processing method, and a computer program which are novel, improved, and capable of: determining processing to be executed for a message from the outside; and providing a response to a message sender.

### SOLUTIONS TO PROBLEMS

According to the present disclosure, provided is an information processing device including: an acquisition unit that acquires message data; a processing determination unit that analyzes the message data and determines a processing target and processing to be executed; and an output unit that outputs a response message including a result of the processing.

Additionally, according to the present disclosure, provided is an information processing method executed by a processor, including: acquiring message data; analyzing the message data and determining a processing target and processing to be executed; and outputting a response message including a result of the processing.

Furthermore, according to the present disclosure, provided is a computer program causing a computer to execute: acquiring message data; analyzing the message data and determining a processing target and processing to be executed; and outputting a response message including a result of the processing.

### EFFECTS OF THE INVENTION

As described above, according to the present disclosure, it is possible to provide an information processing device, an information processing method, and a computer program which are novel, improved, and capable of: determining processing to be executed for a message from the outside; and providing a response to a message sender.

Note that the above-described effects are not necessarily limited, and any one of effects described in the present specification or other effects that can be grasped from the present specification may be exerted in addition to the above-described effects or instead of the above-described effects.

### BRIEF DESCRIPTION OF DRAWINGS

Fig. 1 is an explanatory diagram illustrating an exemplary entire configuration of an information processing system 1 according to an embodiment of the present disclosure.
Fig. 2 is an explanatory view illustrating an exemplary external appearance of an agent device 100 according to the embodiment.
Fig. 3 is an explanatory diagram illustrating exemplary functional components of the agent device 100 according to the embodiment.
Fig. 4 is a flowchart illustrating exemplary operation of the agent device 100 according to the embodiment.
Fig. 5 is an explanatory view illustrating an exemplary user interface displayed on a display 210 of a smartphone 200.
Fig. 6 is an explanatory view illustrating an exemplary user interface displayed on the display 210 of the smartphone 200.
Fig. 7 is an explanatory view illustrating an exemplary user interface displayed on the display 210 of the smartphone 200.
Fig. 8 is an explanatory view illustrating an exemplary user interface displayed on the display 210 of the smartphone 200.
Fig. 9 is an explanatory diagram illustrating a state in which the agent device 100 ask aloud whether it is alright or not to execute image capturing before image capturing processing.
Fig. 10 is a flowchart illustrating exemplary operation of the agent device 100 according to the embodiment.
Fig. 11 is an explanatory diagram illustrating an exemplary entire configuration of an information processing system 1 according to an embodiment of the present disclosure.

### MODE FOR CARRYING OUT THE INVENTION

In the following, preferred embodiments of the present disclosure will be described in detail with reference to the accompanying drawings. Note that, in the present specification and the drawings, a constituent element having substantially a same functional component will be denoted by a same reference sign, and repetition of the same description will be omitted.

Note that the description will be provided in the following order.
1. Embodiment of Present Disclosure
   1.1. Exemplary System Configuration
   1.2. Exemplary External Appearance
   1.3 Exemplary Functional Components
   1.4 Exemplary Operation
   1.5 Exemplary Application
2. Conclusion

### <1. Embodiment of Present Disclosure>

### [1.1. Exemplary System Configuration]

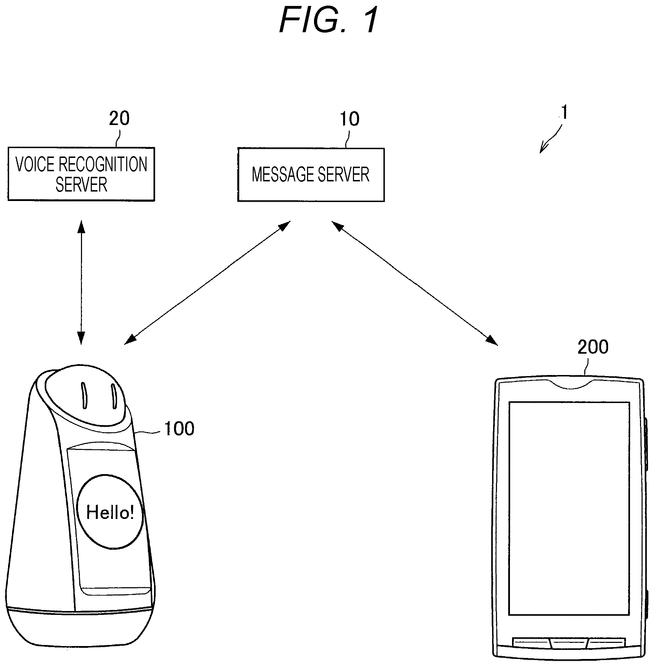

First, a schematic configuration of an information processing system according to an embodiment of the present disclosure will be described with reference to Fig. 1.

Fig. 1 is an explanatory diagram illustrating an exemplary entire configuration of an information processing system 1 according to an embodiment of the present disclosure. As illustrated in Fig. 1, the information processing system 1 according to the embodiment of the present disclosure includes a message server 10, a voice recognition server 20, an agent device 100, and a smartphone 200. The agent device 100 represents an information processing device having a conversation function with a human and a network communication function.

The message server 10 is a server that mediates exchange of text messages, image data, voice data, and the like (hereinafter these will be collectively referred to as message data) via a network. For example, the message data is transmitted to/received from a destination user designated by a user, using an application installed in the smartphone 200. In the present embodiment, the smartphone 200 can designate the agent device 100 as a destination of the message data. When the message data that designates the agent device 100 as a destination is transmitted from the smartphone 200, the message server 10 transmits the message data to the agent device 100. Similarly, when message data that designates the smartphone 200 as a destination is transmitted from the agent device 100, the message server 10 transmits the message data to the smartphone 200.

The voice recognition server 20 is a server that executes voice recognition processing to recognize the content of human voice that is collected by the agent device 100 and spoken toward the agent device 100. The voice recognition server 20 executes, as the content of the voice recognition processing, voice content analysis processing, character string conversion processing, speaker recognition processing, and the like, for example.

As described above, the agent device 100 is an information processing device having the conversation function with a human and the network communication function. An exemplary specific external appearance and exemplary functional components of the agent device 100 will be described in detail later.

The smartphone 200 is a mobile phone including a dedicated operating system (OS), and is a device having a network communication function in addition to a call function. In the present embodiment, the smartphone 200 can perform transmission/reception processing of message data with the agent device 100 via the message server 10 by installing a predetermined application.

When the agent device 100 and the smartphone 200 transmit/receive message data via the message server 10, it is assumed that the agent device 100 and the smartphone 200 are liked to each other. A linking method between the agent device 100 and the smartphone 200 is not limited to a specific method. For example, the agent device 100 and the smartphone 200 may be linked by inputting an ID that has been set in the agent device 100 to an application of the smartphone 200, and also the agent device 100 and the smartphone 200 may be linked by the smartphone 200 capturing and recognizing an image of a two-dimensional barcode displayed on a display of the agent device 100.

In the above, the exemplary configuration of the information processing system 1 according to the embodiment of the present disclosure has been described. Subsequently, an exemplary external appearance of the agent device 100 according to the embodiment of the present disclosure will be described.

### [1.2. Exemplary External Appearance]

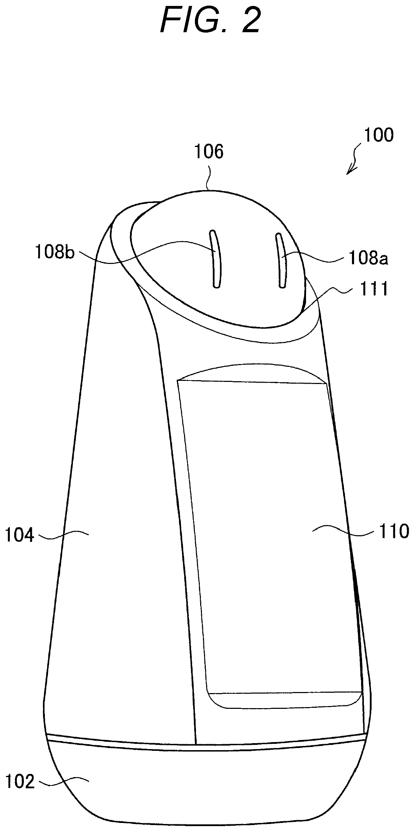

Fig. 2 is an explanatory view illustrating an exemplary external appearance of the agent device 100 according to the embodiment of the present disclosure. Hereinafter, an exemplary external appearance of the agent device 100 according to the embodiment of the present disclosure will be described using Fig. 2.

The agent device 100 according to the embodiment of the present disclosure includes a base 102, a body 104, and a head 106. The base 102 stabilizes the agent device 100 at the time of setting the agent device 100 on a table or the like.

The body 104 includes a display 110. The display 110 includes, for example, a liquid crystal display or an organic EL display. Additionally, the display 110 can include a touch panel. The body 104 is horizontally rotatable in a range of a predetermined angle, such as about 360 degrees, and at the time of rotation, the agent device 100 can rotate only the body 104 without moving the base 102.

The head 106 is provided on an upper portion of the body 104. The head 106 includes light emitting portions 108a and 108b. Light emission regions and light emission colors of the light emitting portions 108a and 108b can be changed in accordance with a state of the agent device 100. For example, the agent device 100 can perform operation like blinking by changing the light emission regions of the light emitting portions 108a and 108b in a short time. Additionally, the head 106 is rotatable in a range of a predetermined angle in vertical and lateral directions, and at the time of rotation, the agent device 100 can rotate only the head 106 without moving the base 102 and the body 104.

The body 104 includes an indicator 111 using a light emitting diode (LED) at a boundary portion with the head 106. A light emission pattern and a light emission color of the indicator 111 can be changed in accordance with the state of the agent device 100.

For example, while a user speaks to the agent device 100, the agent device 100 may continue turning on the indicator 111 during recognition of the utterance, and the agent device 100 may blink the indicator 111 in conformity with output of voice during output of the voice from the agent device 100.

Although not illustrated in Fig. 2, as described later, the agent device 100 according to the embodiment of the present disclosure includes: a camera that captures an image of a peripheral environment; a microphone that collects human voice, peripheral environment sounds, and the like; a speaker that outputs voice; and a sensor that senses states of the agent device 100 and the peripheral environment. The agent device 100 includes a plurality of microphones beamformed so as to easily collect the human voice, the peripheral environment sounds, and the like.

Furthermore, although not illustrated in Fig. 2, the agent device 100 according to the embodiment of the present disclosure includes, on the opposite side of the display 110, a reader/writer that performs proximity contactless communication. When an IC card is brought close to the reader/writer, the agent device 100 can execute processing in accordance with proximity thereof.

The agent device 100 according to the embodiment of the present disclosure analyzes content of utterance of a user, and can execute processing in accordance with the content of the utterance. For example, the agent device 100 can perform interactive processing for a user by analyzing the content of the utterance of the user, and outputting voice in accordance with the content of the utterance. Specifically, when the user speaks to the agent device 100 "Tell me about the weather forecast for tomorrow in Tokyo", the agent device 100 analyzes the content of the utterance and acquires the weather forecast for the next day in Tokyo from the Internet. Then, the agent device 100 outputs, for example, "Tomorrow, it will be sunny and sometimes cloudy in Tokyo" and the like with voice, text, an image, and the like.

Additionally, in a case where a user (defined as a user X) desires to leave a message including a voice message to another user (defined as a user Y), the agent device 100 according to the embodiment of the present disclosure analyzes words uttered by the user X and saves the content of the message and information associated with a destination of the message (user Y). Then, when presence of the user Y is detected, the agent device 100 utters, to the user Y, the message left by the user X.

In the above, the exemplary external appearance of the agent device 100 according to the embodiment of the present disclosure has been described using Fig. 2. Subsequently, exemplary functional components of the agent device 100 according to the embodiment of the present disclosure will be described.

### [1.3. Exemplary Functional Components]

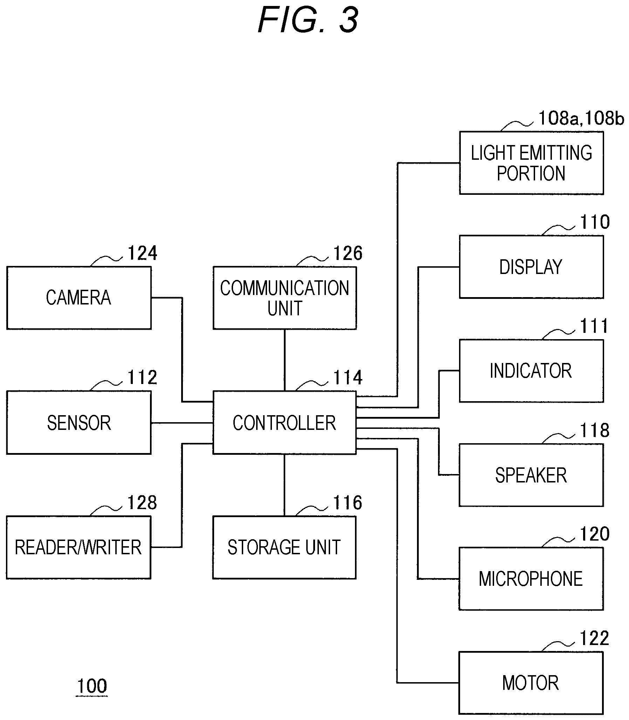

Fig. 3 is an explanatory view illustrating exemplary functional components of the agent device 100 according to the embodiment of the present disclosure. Hereinafter, the exemplary functional components of the agent device 100 according to the embodiment of the present disclosure will be described using Fig. 3.

As illustrated in Fig. 3, the agent device 100 according to the embodiment of the present disclosure includes the light emitting portions 108a and 108b, the display 110, the indicator 111, a sensor 112, a controller 114, a storage unit 116, a speaker 118, a microphone 120, a motor 122, a camera 124, a communication unit 126, and a reader/writer 128. Here, the sensor 112, the controller 114, the storage unit 116, the speaker 118, the microphone 120, the motor 122, the camera 124, the communication unit 126, the reader/writer 128, which are not illustrated in Fig. 2, will be described.

The sensor 112 senses the states of the agent device 100 and the peripheral environment and outputs, to the controller 114, sensed data obtained by the sensing. The sensor 112 includes, for example, at least any one of sensors from among various kinds of sensors such as a human sensor, a positioning sensor, a gyro sensor, a geomagnetic sensor, an illuminance sensor, a temperature sensor, a humidity sensor, an atmospheric pressure sensor, and a heart rate sensor. Note that the above positioning sensor can specifically include, for example, a global navigation satellite system (GNSS) receiver and/or a communication device. The GNSS can include, for example, a global positioning system (GPS), a global navigation satellite system (GLONASS), a BeiDou navigation satellite system (BDS), a Quasi-Zenith satellites system (QZSS), Galileo, or the like. Additionally, the positioning sensor can include, for example, a device that detects a position by utilizing a technology such as wireless LAN, multi-input multi-output (MIMO), cellular communication (e.g., position detection or femtocell using a mobile base station), near field communication (e.g., Bluetooth low energy (BLE), or Bluetooth (registered trademark)).

The controller 114 includes, for example, a central processing unit (CPU), a read only memory (ROM), and a random access memory (RAM), and controls operation of the agent device 100. When the controller 114 controls the operation of the agent device 100, the controller 114 can use the sensed data output by the sensor 112, voice data collected by the microphone 120, image data captured by the camera 124, communication data received by the communication unit 126, data stored in the storage unit 116, and the like.

In the present embodiment, the controller 114 executes operation as described below in detail. When the controller 114 executes the operation as described below, the agent device 100 can execute interactive processing with a human, message processing for a human, and the like. Accordingly, the controller 114 can function as a processing determination unit of the present disclosure.

The storage unit 116 includes, for example, a nonvolatile or volatile memory, and holds programs and data necessary for the operation of the agent device 100, and stores an operation log of the agent device 100. Specifically, the storage unit 116 stores, as the operation log, a user recognized by the camera 124 and recognition time thereof, content of conversation and time of the conversation with the user, content of message data transmitted to/received from the smartphone 200, and the like.

The speaker 118 outputs voice under the control of the controller 114. The microphone 120 collects voice of a human in a periphery of the agent device 100, peripheral environment sounds, and the like. The sounds collected by the microphone 120 are transmitted to the controller 114. The motor 122 is a motor to drive the body 104 and the head 106 under the control of the controller 114. The camera 124 captures a still image or a moving image of the peripheral environment of the agent device 100. The camera 124 is provided at, for example, the head 106 and captures an image in a direction of a front surface (surface where the light emitting portions 108a and 108b are provided) of the agent device 100. The communication unit 126 executes communication processing with another device by establishing connection to a wireless LAN or the like, or using a wireless communication standard such as infrared communication or Bluetooth (registered trademark), for example. The reader/writer 128 executes communication with the IC card or the like by the proximity contactless communication.

Note that the communication unit 126 can function as an example of an acquisition unit and an example of an output unit of the present disclosure.

The agent device 100 according to the embodiment of the present disclosure can execute operation described below by having the above-described configuration.

In the above, the exemplary functional components of the agent device 100 according to the embodiment of the present disclosure have been described using Fig. 3. Subsequently, exemplary operation of the information processing system 1 according to the embodiment of the present disclosure will be described.

### [1.4. Exemplary Operation]

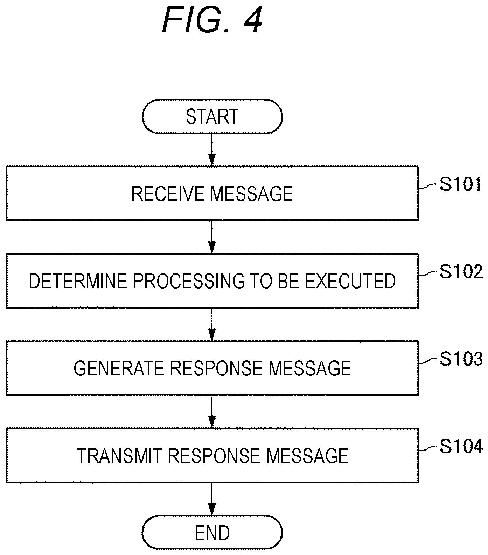

Exemplary operation of the agent device 100 will be described as the exemplary operation of the information processing system 1 according to the embodiment of the present disclosure. Fig. 4 is a flowchart illustrating the exemplary operation of the agent device 100 according to the embodiment of the present disclosure. Hereinafter, the exemplary operation of the agent device 100 according to the embodiment of the present disclosure will be described using Fig. 4.

When the agent device 100 receives message data from the message server 10 (step S101), the agent device 100 determines processing to be executed on the basis of the received message data (step S102). For example, the communication unit 126 executes reception processing of the message data in step S101. Additionally, for example, the controller 114 executes the processing in step S102.

For example, in a case where content of the message data received from the message server 10 is to request information associated with a state of a family, the agent device 100 executes processing to refer to an operation log stored in the storage unit 116. Furthermore, for example, in a case where the content of the message data received from the message server 10 is to request image capturing of a periphery of the agent device 100, the agent device 100 captures the image of the periphery by using the camera 124. In a case of capturing the image of the periphery in response to reception of the message data, the agent device 100 may seek permission to capture the image as described later.

Subsequently, the agent device 100 executes the processing determined in step S102, and generates a response message to a person who has transmitted the message data (step S103). For example, the controller 114 executes processing in step S103.

For example, in a case where content of the message data received from the message server 10 is to request the information associated with the state of the family, the agent device 100 generates, for each family member, a response message that describes how long ago each family member has been seen most recently. Furthermore, for example, in a case where the content of the message data received from the message server 10 is to request image capturing of the periphery of the agent device 100, the agent device 100 generates a response message including the image of the periphery.

Subsequently, the agent device 100 transmits the response message generated in step S103 to the message server 10 (step S104). For example, the communication unit 126 executes the response message transmission processing in step S104.

With execution of a series of operation illustrated in Fig. 4, the agent device 100 analyzes the message data transmitted from the message server 10 and can determine the processing in accordance with the message data. Then, the agent device 100 executes the determined processing and can generate a response message based on the processing. Furthermore, the agent device 100 can transmit the generated response message to the message server 10.

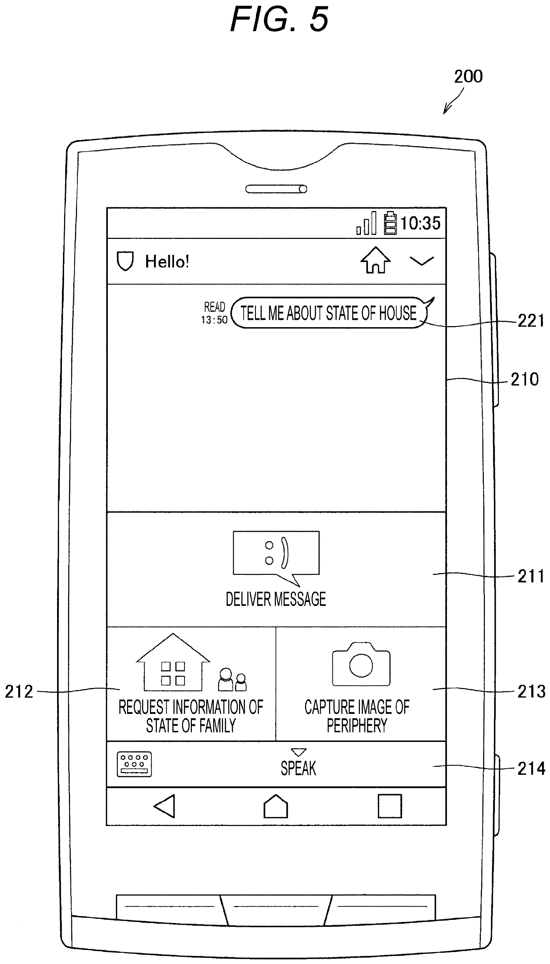

The agent device 100 provides an exemplary user interface displayed on the smartphone 200 by executing the series of operation illustrated in Fig. 4. Figs. 5 to 8 are explanatory views illustrating exemplary user interfaces displayed on a display 210 of the smartphone 200. Figs. 5 to 8 illustrate the exemplary user interfaces displayed on the display 210 by using an application installed in the smartphone 200 at the time of executing transmission/reception processing of message data with the agent device 100 via the message server 10.

Fig. 5 illustrates a state of the display 210 in a case where a user of the smartphone 200 transmits, from an outside visiting place to the agent device 100, message data to request information associated with a state of a house. A button 211 is a button for the user of the smartphone 200 to deliver, to the agent device 100, words of a message. The message here may be a text message or a voice message. A button 212 is a button to request the agent device 100 to provide information associated with a state of a family. A button 213 is a button to request the agent device 100 to capture an image of the periphery and transmit the captured image. A button 214 is, the button 211 is a button for the user of the smartphone 200 to transmit a message to the agent device 100, and has a function equivalent to that in the case of pressing the buttons 212 and 213. When the button 214 is pressed, an input area to input a text message and a button to transmit the image are displayed on the display 210.

Fig. 5 is an exemplary user interface displayed on the display 210 in the case where the user of the smartphone 200 presses the button 212. When the user of the smartphone 200 presses the button 212 displayed on the display 210, message data 221 to request the agent device 100 to provide the information associated with the house is displayed as illustrated in Fig. 5. Additionally, when the user of the smartphone 200 presses the button 212 displayed on the display 210, the smartphone 200 transmits the message data 221 to the message server 10. The message server 10 transmits, to the agent device 100 that is a destination, the message data that has been transmitted from the smartphone 200.

When the agent device 100 receives, from the message server 10, the message data to request the information associated with state of the house, the agent device 100 determines to execute the processing to generate a response message with reference to data stored in the storage unit 116. Then, the agent device 100 refers to the data stored in the storage unit 116, generates the response message, and executes processing to transmit the response message to the smartphone 200 that is the message data transmission source.

For example, as a result of referring to the data stored in the storage unit 116, assume that the controller 114 determines that a son, Manabu, was recognized 5 minutes ago but the wife (mother for Manabu) has never been recognized today. In this case, the controller 114 generates a response message indicating that Manabu was seen 5 minutes ago but the mother has never been seen from the .

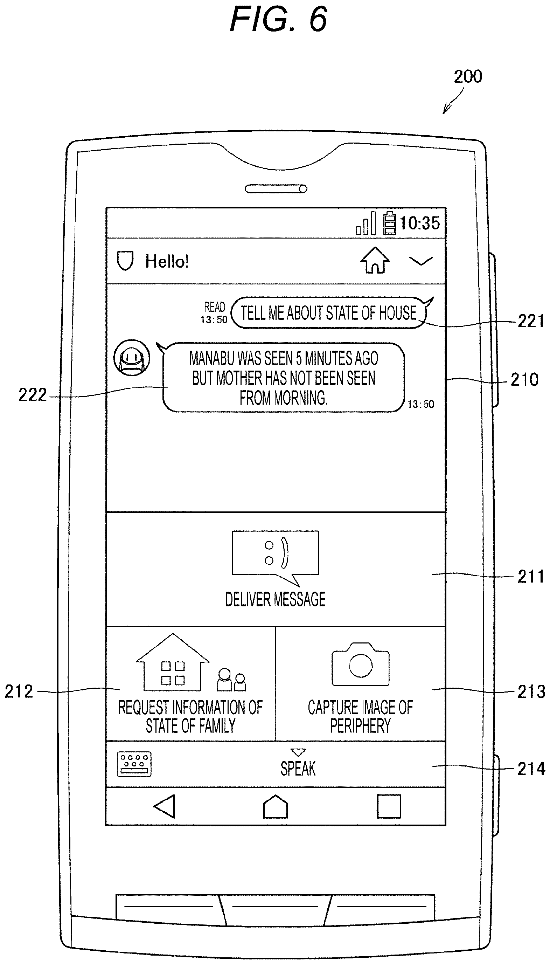

Fig. 6 is an exemplary user interface displayed on the display 210 of the smartphone 200 that has received the response message from the agent device 100. Fig. 6 illustrates a state in which the message indicating that Manabu was seen 5 minutes ago but the mother has never been seen from the morning is displayed on the display 210 as a response message 222 from the agent device 100.

Here, the example which the message data that requests the information associated with the state of the house is transmitted from the smartphone 200 has been described, but the present disclosure is not limited to this example. For example, message data that designates a specific person in the family and requests information associated with the person may also be transmitted from the smartphone 200. For example, message data like "Tell me about the state of Manabu" may also be transmitted from the smartphone 200 to the agent device 100 via the message server 10. When the agent device 100 receives the message data like "Tell me about the state of Manabu" from the message server 10, the agent device 100 refers to data about Manabu from among the data stored in the storage unit 116, and generates a response message.

For example, the agent device 100 may set, as a range of log information to be referred to, a period from when the message data is transmitted from the smartphone 200 most recently till now. Additionally, for example, the agent device 100 may set, as a data period to be referred to, a day including the time when message data is transmitted from the smartphone 200. When the period is explicitly designated in the message data transmitted from the smartphone 200, the agent device 100 may set this period as the data period to be referred to. For example, in a case where message data like "Tell me about the state of Manabu within recent one hour" or "Tell me about the state of Manabu in the morning" is transmitted from the smartphone 200, the agent device 100 determines this period as the data period to be referred to.

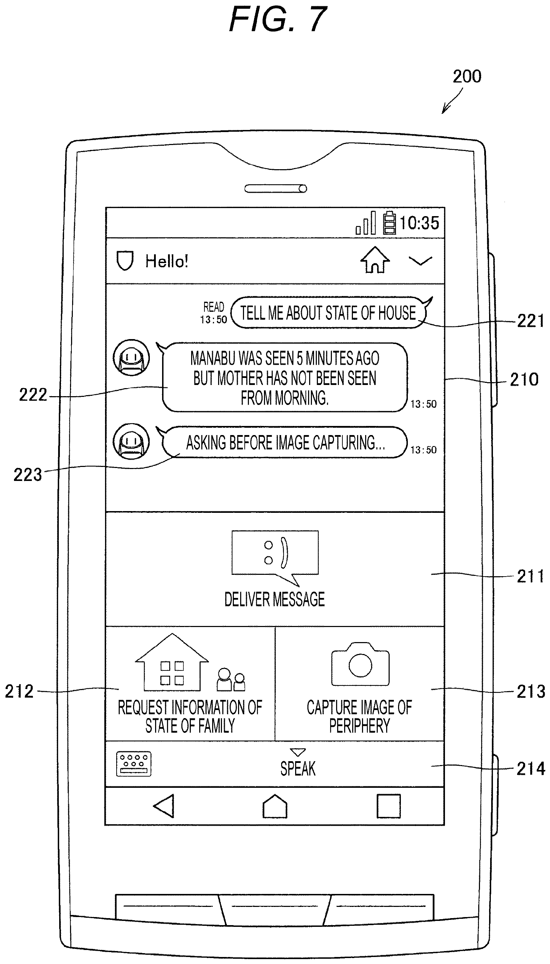

Fig. 7 is an exemplary user interface displayed on the display 210 in a case where the user of the smartphone 200 presses the button 213 to cause the agent device 100 to capture an image of the periphery. When the user of the smartphone 200 presses the button 213 displayed on the display 210, the agent device 100 receives, via the message server 10, message data including a command to capture the image of the periphery.

When the agent device 100 receives the message data including the command to capture the image of the periphery, the agent device 100 may directly execute the imaging, but may also ask aloud whether it is alright or not to execute image capturing before the image capturing. Fig. 7 illustrates a state in which the display 210 of the smartphone 200 displays a response message 223 indicating that the agent device 100 is asking aloud, to the periphery, whether it is alright or not to execute the image capturing before the image capturing. In a case where permission for the image capturing is obtained, the agent device 100 executes the image capturing using the camera 124 while moving the body 104 and the head 106.

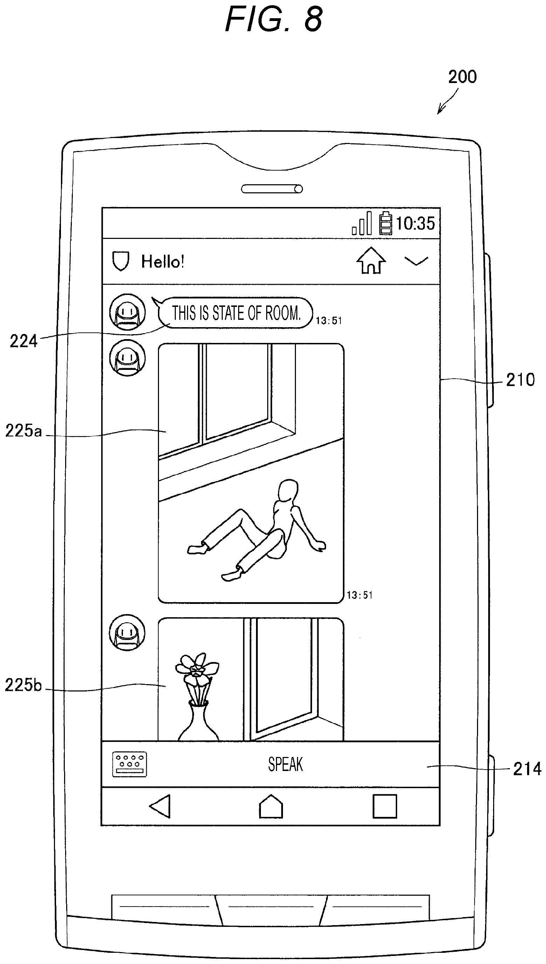

Fig. 8 is an explanatory view illustrating an exemplary user interface displayed on the display 210 of the smartphone 200. Fig. 8 illustrates a state in which the display 210 of the smartphone 200 displays: a response message 224 that is transmitted from the agent device 100 and indicates that images of the periphery have been captured; and images 225a and 225b captured by the agent device 100 with the camera 124. Thus, since the images captured by the agent device 100 with the camera 124 are transmitted to the smartphone 200 via the message server 10, the user of the smartphone 200 can confirm, from an outside visiting place and the like, situations in the periphery of the agent device 100.

Note that the agent device 100 may capture not only a still image but also a moving image and transmit the captured image to the smartphone 200. Furthermore, at the time of capturing the still image, the agent device 100 may capture an image having a panoramic effect by joining images captured at different angles.

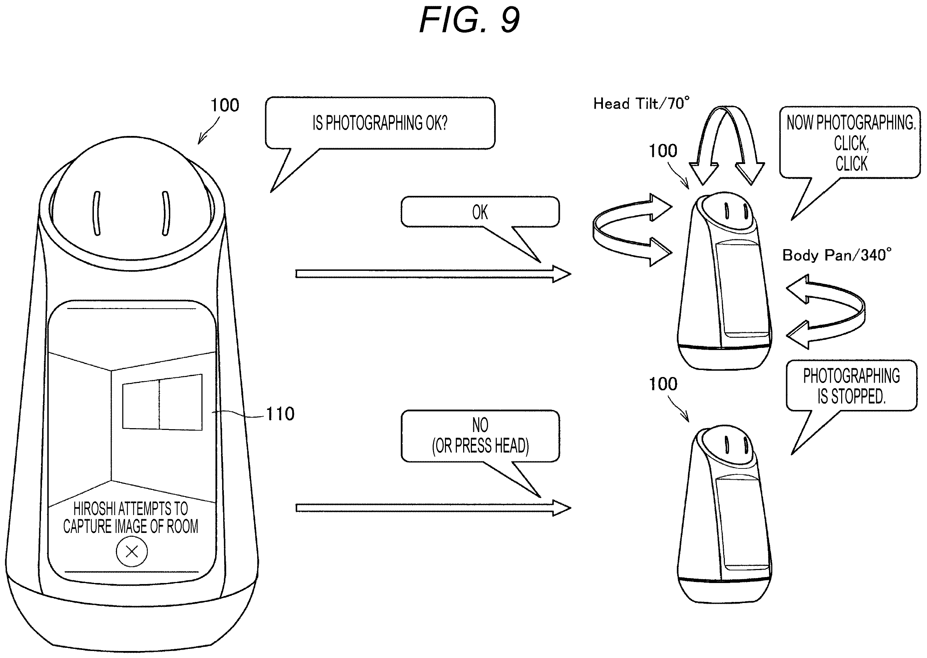

As described above, when the agent device 100 receives message data including the command to capture the image of the periphery, the agent device 100 may ask aloud whether it is alright or not to execute the image capturing before the image capturing processing. Fig. 9 is an explanatory diagram illustrating a state in which the agent device 100 ask aloud whether it is alright or not to execute the image capturing before the image capturing processing. Fig. 9 illustrates the state in which the agent device 100 is asking aloud "Is photographing OK?" to the periphery before the image capturing processing. At this time, an image (through image) viewed through the camera 124 is displayed on the display 110 of the agent device 100.

When any human in the periphery of the agent device 100 utters an affirmative message like "OK" and the like, the agent device 100 executes the image capturing processing using the camera 124 while moving the body 104 and the head 106. In the case of executing the image capturing processing using the camera 124, the agent device 100 may utter, from the speaker 118, a message indicating that the image capturing is being executed, such as "Now photographing".

On the other hand, when any human in the periphery of the agent device 100 utters a negative message like "No" and the like, or makes an action like pressing the head 106 and the like, the agent device 100 does not execute the image capturing processing using the camera 124. In the case of not executing the image capturing processing using the camera 124, the agent device 100 may utter, from the speaker 118, a message indicating that the image capturing processing is stopped, such as "Photographing is stopped". In a case where a human in the periphery of the agent device 100 does not utter any word or does not make any action for a predetermined period, the agent device 100 executes the image capturing processing using the camera 124. Note that a kind of message or a kind of action that causes the agent device 100 to cancel the image capturing processing may be changed in accordance with settings. For example, it may be fine to provide: a setting in which the agent device 100 cancels the image capturing processing in the case where the head 106 is pressed; or a setting in which the agent device 100 executes the image capturing processing in the case where the head 106 is pressed. Additionally, in a case where the agent device 100 recognizes, with the camera 124, a person who is not a person having been recognized in advance by the agent device 100, the image capturing processing may be executed even in a case where the action to cancel the image capturing processing is made. Needless to mention that the action to cancel the image capturing processing is not limited to the above examples.

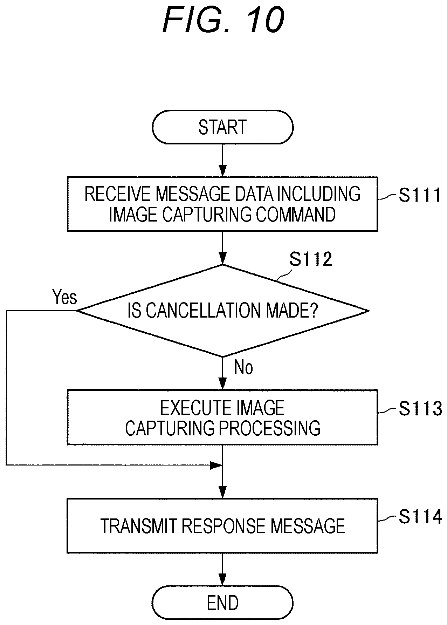

Fig. 10 is a flowchart illustrating exemplary operation of the agent device 100 according to the embodiment of the present disclosure. Fig. 10 illustrates the exemplary operation of the agent device 100 when message data including an image capturing command is transmitted from the smartphone 200 via the message server 10. Hereinafter, the exemplary operation of the agent device 100 according to the embodiment of the present disclosure will be described using Fig. 10.

When the agent device 100 receives the message data including the image capturing command from the smartphone 200 (step S111), the agent device 100 waits until cancelation (step S112). For example, the communication unit 126 executes reception processing of the message data in step S111. Furthermore, for example, the controller 114 executes the processing in step S112. Determination criteria for cancellation are, for example: whether a negative message such as "No" is uttered, or an action such as pressing the head 106 is made or not; and whether no word is uttered, or no action is made for the predetermined period or not, as described above.

Without cancellation (step S112, No), the agent device 100 executes the image capturing processing using the camera 124 (step S113). On the other hand, when cancellation is made (step S112, Yes), the agent device 100 does not execute the image capturing processing using the camera 124.

In both of the case where the image capturing processing is executed or the case where the image capturing processing is not executed, the agent device 100 generates a response message for the smartphone 200 and transmits the response message to the smartphone 200 (step S114). In the case of executing the image capturing processing, the agent device 100 transmits, to the smartphone 200, the response message including the image captured by the image capturing processing in step S113 described above. On the other hand, in a case of not executing the image capturing processing, the agent device 100 generates a response message indicating that the image capturing processing has not been executed, and transmits the response message to the smartphone 200. In the case of not executing the image capturing processing, the agent device 100 may include, in the response message, a reason for not having executed the image capturing processing. In the case where a negative message is uttered and the person who has uttered the message can be identified by voice recognition processing, the agent device 100 may include, in a response message, information of the person who has canceled the image capturing processing. Furthermore, in the case where the negative action is executed and the person who has executed the action can be identified by image recognition processing using an image captured by the camera 124, the agent device 100 may include, in the response message, information of the person who has canceled the image capturing processing.

With execution of a series of operation illustrated in Fig. 10, the agent device 100 according to the embodiment of the present disclosure can execute the image capturing processing using the camera 124 in accordance with reception of message data transmitted from the smartphone 200 and including an image capturing command. Furthermore, at this time, in a case where any action to cancel the image capturing processing is made by a human in the periphery of the agent device 100, the agent device 100 cancels the image capturing processing and also transmits, to the smartphone 200, a message indicating that the image capturing processing has been canceled.

When the agent device 100 according to the embodiment of the present disclosure executes the image capturing processing using the camera 124, in a case where message data includes information associated with an image capturing direction and an image capturing place as an image capturing target, the agent device 100 may follow the information. Assuming that the agent device 100 can recognize a position of an object in a room, when the information associated with the specific image capturing direction and the specific image capturing place is included from the smartphone 200, the image capturing processing using the camera 124 may be executed while moving the body 104 and the head 106 according to the information.

The agent device 100 can receive a message from the smartphone 200 via the message server 10. For example, when the button 211 is pressed on the user interface illustrated in Fig. 5 or the like, it is possible to leave a message to the agent device 100. This message may be voice or text.

### [1.5. Exemplary Application]

The example provided up to here describes the example in which message data is transmitted from the smartphone 200 to the agent device 100, the agent device 100 executes the processing in accordance with the message data and returns a response message to the smartphone 200. By applying this series of processing, it is possible to cause, from an outside visiting place, the agent device 100 to check a state of a sensor and a state of a home electric appliance disposed inside a house, or it is possible to cause the agent device 100 to be linked with another agent device 100 inside the house.

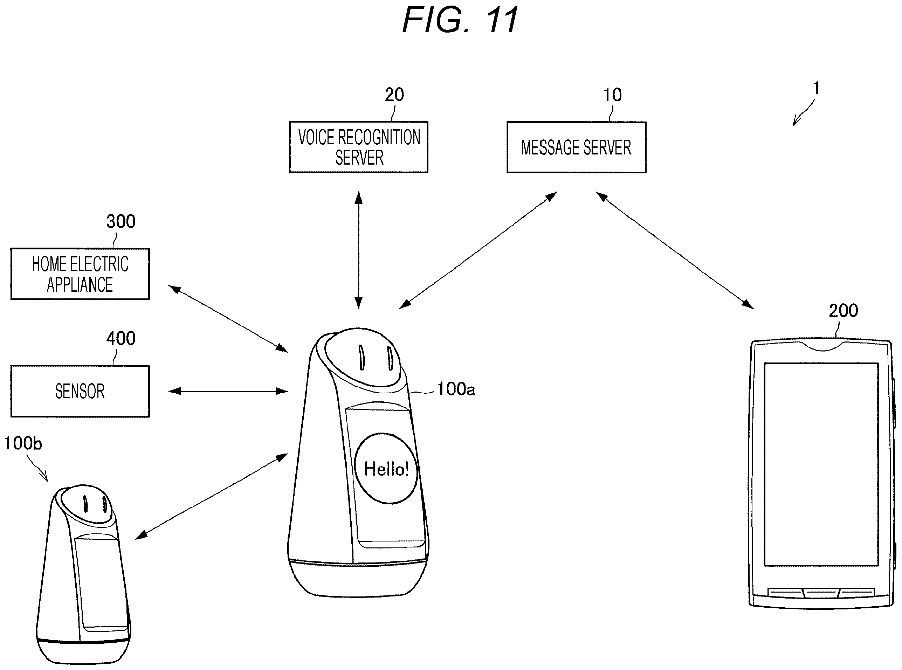

Fig. 11 is an explanatory diagram illustrating an exemplary configuration of the information processing system 1 according to the embodiment of the present disclosure. Fig. 11 illustrates an information processing system 1 including the message server 10, the voice recognition server 20, agent devices 100a and 100b, the smartphone 200, a home electric appliance 300, and a sensor 400.

The home electric appliance 300 includes, for example, a television, a hard disk recorder, an air conditioner, a refrigerator, a lighting fixture, or the like. Assume that the home electric appliance 300 has a network communication function and can perform wireless communication with agent device 100a. Additionally, each home electric appliance 300 can control operation in accordance with a command from the agent device 100a and can notify the agent device 100a of a state.

Examples of the sensor 400 can include, for example, a human sensor, a sensor that checks a locked state of an entrance door, a window, or the like, a sensor that checks a state of a faucet, a sensor that checks presence/absence of gas leakage, a network camera, and the like. The sensor 400 also has a network communication function, and can perform wireless communication with the agent device 100a. Furthermore, each sensor 400 can control operation in accordance with a command from the agent device 100a and notify the agent device 100a of a state.

Since the information processing system 1 is has the above-described configuration, a user of the smartphone 200 can cause the agent device 100a to check a state of a house from an outside visiting place, or control the operation of the home electric appliance 300 from the agent device 100a.

For example, when message data to check the state of the home electric appliance 300 is transmitted from the smartphone 200 to the agent device 100a, the agent device 100a communicates with the designated home electric appliance 300 and collects information associated with the state of the home electric appliance 300. Then, the agent device 100a transmits, to the smartphone 200, the collected information associated with the state of the home electric appliance 300 as a response message.

Additionally, for example, when message data to check a locked state of an entrance or a window is transmitted from the smartphone 200 to the agent device 100a, the agent device 100a communicates with the designated sensor 400 and collects information associated with a state of the sensor 400. Then, the agent device 100a transmits, to the smartphone 200, the collected information associated with the state of the sensor 400 as a response message.

Since the information is thus collected from the sensor 400, the agent device 100a can collect information associated with a place that cannot be recognize by the agent device 100a, and can provide the information to the smartphone 200.

Furthermore, in a case where the plurality of agent devices 100a and 100b is disposed inside the house, the plurality of agent devices 100a and 100b is linked with each other to generate a response message relative to message data from the smartphone 200. This use case is considered useful in the following cases.

For example, the user of the smartphone 200 transmits, from an outside visiting place to the agent device 100a, message data to check a state of a child. The agent device 100a having received the message data checks whether or not any log associated with the child is stored in the storage unit 116 for a predetermined period, but when the log associated with the child is not stored in the storage unit 116 for the predetermined period, an inquiry is made to the other agent device 100b to check whether or not any log associated with the child is stored for the predetermined period. In a case where the log associated with the child is stored in the agent device 100b, the agent device 100a acquires the log from the agent device 100b and generates a response message including the state of the child. On the other hand, in a case where the log associated with the child is not stored in the agent device 100b, the agent device 100a generates a response message indicating that none of the agent devices has seen the child.

Thus, since the agent device 100a is linked to various devices disposed inside the house, the agent device 100a illustrated in Fig. 11 can acquire a state of each of the devices or controls each of the devices in accordance with message data transmitted from the smartphone 200, and can transmit a result thereof to the smartphone 200 as a response message.

The smartphone 200 may transmit, from the outside visiting place to the agent device 100, message data to inquire about a location of a family of the user of the smartphone 200. The agent device 100 having received the message data to inquire the location of the family may makes an inquiry to a device of a family that has been registered, and may acquire positional information from the device. Then, the agent device 100 may return, to the smartphone 200, a response message including the positional information acquired from the device of the family. When the response message including the positional information is returned to the smartphone 200, the agent device 100 may return a specific place such as a company or a school, or may return a response message with a granularity level such as whether at home or not, like "not at home".

Furthermore, in the above-described example, it has been described that the message data is transmitted via the network, but the present disclosure is not limited to the example. For example, the message data may be transmitted as voice data. When the voice data is collected, the agent device 100 may transmit the collected voice data to the voice recognition server 20 for recognition, and then determine processing to be executed on the basis of the recognition result.

### <2. Conclusion>

As described above, according to the embodiment of the present disclosure, provided is the agent device 100 that determines processing to be executed on the basis of message data transmitted from the outside, and generates and outputs a response message including a result of the processing.

The respective steps in the processing executed by the respective devices in the present specification are not necessarily carried out in time series along the order described as the sequence diagram or the flowchart. For example, the respective steps in the processing executed by the respective devices may be carried out in order different from the order described as the flowchart, or may be carried out in parallel.

Additionally, it is also possible to create a computer program to cause hardware, such as a CPU, ROM, and a RAM incorporated in each of the devices, to exert functions equivalent to the configuration of each of the devices described above. Additionally, it is also possible to provide a storage medium in which the computer program is stored. Furthermore, the series of the processing can also be implemented by hardware by configuring each of the functional blocks illustrated in the functional block diagram with the hardware.

While the preferred embodiments of the present disclosure have been described in detail with reference to the attached drawings, the technical scope of the present disclosure is not limited to the examples. It is obvious that a person having ordinary knowledge in the technical field of the present disclosure can readily conceive a modified example or a revised example within the scope of the technical idea described in the claims, and it should be understood that such examples are also included in the technical scope of the present disclosure.

For example, in the above-described example, it has been described that the smartphone transmits message data, but the present disclosure is not limited to the smartphone that transmits the message data. For example, a wearable device having a communication function may transmit message data to the message server 10. Furthermore, a device having a communication function and also having a function to transmit message data to the message server 10 can be a device that transmits message data in the present disclosure.

Additionally, the effects described in the present specification are merely illustrative or exemplary and are not limitative. In other words, the technology according to the present disclosure can provide, in addition to or instead of the above-described effects, other effects that are apparent to those skilled in the art from the description of the present specification.

Note that the following configurations are also included in the technical scope of the present disclosure.
(1) An information processing device including:
   an acquisition unit that acquires message data;
   a processing determination unit that analyzes the message data and determines a processing target and processing to be executed; and
   an output unit that outputs a response message including a result of the processing.
(2) The information processing device recited in (1) above, further including a storage unit that stores log information,
   in which the processing determination unit determines to execute processing to refer to the log information stored in the storage unit.
(3) The information processing device recited in (2) above, in which the processing determination unit selects a range of the log information to be referred to in accordance with content of the message data.
(4) The information processing device recited in (2) or (3) above, in which the processing determination unit refers to the log information associated with the processing target in accordance with the content of the message data.
(5) The information processing device recited in any one of (2) to (4) above, in which the response message includes information based on time at which the log information associated with the processing target is recorded.
(6) The information processing device recited in (1) above, further including an image capturing unit that captures an image of a periphery,
   in which the processing determination unit determines to execute image capturing processing by the image capturing unit.
(7) The information processing device recited in (6) above, in which the processing determination unit determines, as the processing target, a target of image capturing by the image capturing unit.
(8) The information processing device recited in (6) or (7) above, in which the response message includes image data generated by the image capturing processing.
(9) The information processing device recited in (1) above, in which the processing determination unit determines to execute processing to collect information from another device.
(10) The information processing device recited in (1) above, in which the processing determination unit determines to execute processing to control operation of another device.
(11) The information processing device recited in any one of (1) to (10) above, in which the acquisition unit acquires the message data from a network.
(12) The information processing device recited in any one of (1) to (10) above, in which the acquisition unit acquires the message data after converting the message data into voice data.
(13) An information processing method executed by a processor, including:
   acquiring message data;
   analyzing the message data and determining a processing target and processing to be executed; and
   outputting a response message including a result of the processing.
(14) A computer program causing a computer to execute:
   acquiring message data;
   analyzing the message data and determining a processing target and processing to be executed; and
   outputting a response message including a result of the processing.

### REFERENCE SIGNS LIST

- 100: Agent device
- 200: Smartphone

## Claims

1. An information processing device comprising:
an acquisition unit configured to acquire message data;
a processing determination unit configured to analyze the message data and determine a processing target and processing to be executed; and
an output unit configured to output a response message including a result of the processing.

2. The information processing device according to claim 1, further comprising a storage unit configured to store log information,
wherein the processing determination unit determines to execute processing to refer to the log information stored in the storage unit.

3. The information processing device according to claim 2, wherein the processing determination unit selects a range of the log information to be referred to in accordance with content of the message data.

4. The information processing device according to claim 2, wherein the processing determination unit refers to the log information associated with the processing target in accordance with the content of the message data.

5. The information processing device according to claim 2, wherein the response message includes information based on time at which the log information associated with the processing target is recorded.

6. The information processing device according to claim 1, further comprising an image capturing unit configured to capture an image of a periphery,
wherein the processing determination unit determines to execute image capturing processing by the image capturing unit.

7. The information processing device according to claim 6, wherein the processing determination unit determines, as the processing target, a target of image capturing by the image capturing unit.

8. The information processing device according to claim 6, wherein the response message includes image data generated by the image capturing processing.

9. The information processing device according to claim 1, wherein the processing determination unit determines to execute processing to collect information from another device.

10. The information processing device according to claim 1, wherein the processing determination unit determines to execute processing to control operation of another device.

11. The information processing device according to claim 1, wherein the acquisition unit acquires the message data from a network.

12. The information processing device according to claim 1, wherein the acquisition unit acquires the message data after converting the message data into voice data.

13. An information processing method executed by a processor, comprising:
acquiring message data;
analyzing the message data and determining a processing target and processing to be executed; and
outputting a response message including a result of the processing.

14. A computer program causing a computer to execute:
acquiring message data;
analyzing the message data and determining a processing target and processing to be executed; and
outputting a response message including a result of the processing.
